Europäisches Patentamt

European Patent Office

Office européen des brevets

(11) Veröffentlichungsnummer: **0 459 184 A2**

# (12) EUROPÄISCHE PATENTANMELDUNG

(21) Anmeldenummer: **91107376.5**

(22) Anmeldetag: **07.05.91**

(51) Int. Cl.⁵: **C01C 1/10, C02F 1/58, C05C 3/00, C05F 3/00**

(30) Priorität: **16.05.90 CH 1651/90**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **P.B.I. AG**
**Zentrum Trotte, Centralstrasse 14 A**
**CH-6210 Sursee(CH)**

(72) Erfinder: **Disler, Franz**
**Pilatusrain 7**
**CH-6210 Sursee(CH)**

(74) Vertreter: **Arato, Laszlo**
**Seebuchtstrasse 19**
**CH-6374 Buochs(CH)**

(54) **Gewinnung von Ammoniakwasser.**

(57) Um Ammoniakwasser aus Lösungen insbesondere aus Abwässern wie Jauche und Gülle zu gewinnen wird die Lösung unter Einwirkung von Druck und Wärme erhitzt und anschliessend so entspannt, dass die Brüden zu Ammoniakwasser kondensieren. Für die Steigerung der Wirtschaftlichkeit wird für die Erwärmung der Lösung der Entspannungsdampf vorgeschlagen.

Fig.1

EP 0 459 184 A2

Die Erfindung betrifft ein Verfahren für die Gewinnung von Ammoniakwasser, gemäss den kennzeichnenden Merkmalen des Anspruchs 1.

Ammoniak ist ein farbloses, überriechendes, giftiges Gas. Seine wässerige Ammoniaklösung heisst Ammoniakwasser, und die etwa 10% Lösung volkstümlich Salmiakgeist. Ammoniak kommt in der Natur bei der Fäulnis stickstoffhaltiger, pflanzlicher und tierischer Substanzen vor und wird in Form von Harnstoff oder als Purine von den Tieren ausgeschieden. In der Landwirtschaft fallen diese Substanzen als Gülle oder Jauche an, und werden durch das Ausbringen auf der Wiese und dem Felde entsorgt. Dabei verflüchtigt sich das Ammoniak und erzeugt den eigenartigen, unangenehmen Geruch der Jauche, oder wird als wässerige Lösung vom Meteorwasser in die Oberflächengewässer oder als Sickerwasser in das Grundwasser geschwämmt. Die Folgen sind; für die Umwelt Sauerstoffmangel und Eutrophierung des Gewässers, das im akuten Stadium zum Kippen des Oekosystems führt und als Algenplage sichtbar wird, und die Minderung der Trinkwasserqualität die das Ansteigen der Krebsgefahr zur Folge hat.

Anderseits ist Ammoniak ein unentbehrliches Grundprodukt der Industrie und wird als kostbare Agrarchemikalie sehr geschätzt. Für die industrielle Synthese von Ammoniak aus Luft und Wasser wird viel Energie bei sehr hohen Drücken und Temperaturen gebraucht.

Ein bekanntes Verfahren für die Gewinnung vom Ammoniak aus Kokereigasen, Abgasen oder Brüden besteht aus der Reaktion mit Schwefelsäure für die Herstellung von Ammoniumsulfat. Die Betriebskosten sind allerdings wegen dem Schwefelsäurepreis etwa dreimal höher als der Düngerwert.

Eine weitere, bekannte Möglichkeit für die Rückgewinnung von Ammoniak aus Gasen oder Brüden ist das Strippen (Wegnehmen). Dazu werden die Gase und Brüden durch sogenannte Stripperkolonnen geführt und das Ammoniak mit Schwefel- oder Salzsäure behandelt. Der Düngerwert des auf diese Art anfallenden Ammoniumsulfates respektive Stickstoffmagnesia vermag allerdings den hohen technischen Aufwand dieses Verfahrens allein nicht zu rechtfertigen.

Bei einem neuartigen Düngerverfahren mit Depotwirkung wird Salmiakgeist in geringen Tiefen des Bodens eingearbeitet. Die Verwendung weiteren Chemikalien ist überflüssig.

Erstrebte Ziele der Stickstoffdüngerhersteller sind daher andere Verfahren für die Herstellung von Ammoniak zu verwenden und den Dünger gegen das Auswaschen zu schützen.

Die vorliegende Erfindung stellt sich daher die Aufgabe, ein automatisches Verfahren für die Gewinnung vom Ammoniakwasser, insbesondere für Stickstoffdünger zu erstellen, die aus Abfällen insbesondere aus Abfällen der Landwirtschaft (die ohnehin zu entsorgen sind) ausgeht, sehr wenig Energie und gar keine Chemikalien braucht.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert:

Aus einer Druckleitung 1 wird kalte Gülle mit ca. 15°C Temperatur in einen Wärmeaustauscher 20, mit Rührwerk 21 und Rührwerkantrieb 22 gepumpt. Da die Stufen der Wärmetauscher 25, 26, 27, 28 beheizt sind, erhöht sich die Temperatur der Gülle nach relativ kurzer Aufenthaltszeit auf ca. 130 bis 160°C, und strömt durch das Entspannungsventil 30 in den Entgaser 40. Die im Dom des Entgasers 40 gesammelten Brüden aus Ammoniak und Wasserdampf werden durch die Leitung 27' in die Stufen des Wärmetauschers 27,26,25 geführt, wo ihre Wärme von der zu erwärmenden, im Inneren des Wärmetauscher 20 sich vorwärts bewegten Gülle übernommen wird. Dabei kondensieren die Brüden in den durch Kondenstöpfe 60',60'',60''' getrennten Stufen des Wärmetauschers 27,26,25 und lösen das Ammoniak zu Wasserammoniak, das sich schliesslich als Salmiakgeist 50' im Auffangbehälter 50 sammelt. Das im Entgaser anfallende, entgaste und eingedickte Substrat 40' kann je nach Bedarf weiter eingedickt oder getrocknet werden. Es ist geruchlos, steril und kann je nach Bedarf und Konsistenz als Schlamm oder als Trockendünger verwertet werden. Entsprechend der Weiterverarbeitung wird sein Wärmeinhalt zurückgewonnen oder erhöht. Danach richtet sich die Verlustwärme, die in der letzten Stufe 28 des Wärmetauschers 20 durch eine nicht dargestellte, nur durch die Dampfleitungen 28' und Kondensatleitung 28'' angedeutete Dampfheizung, ersetzt wird.

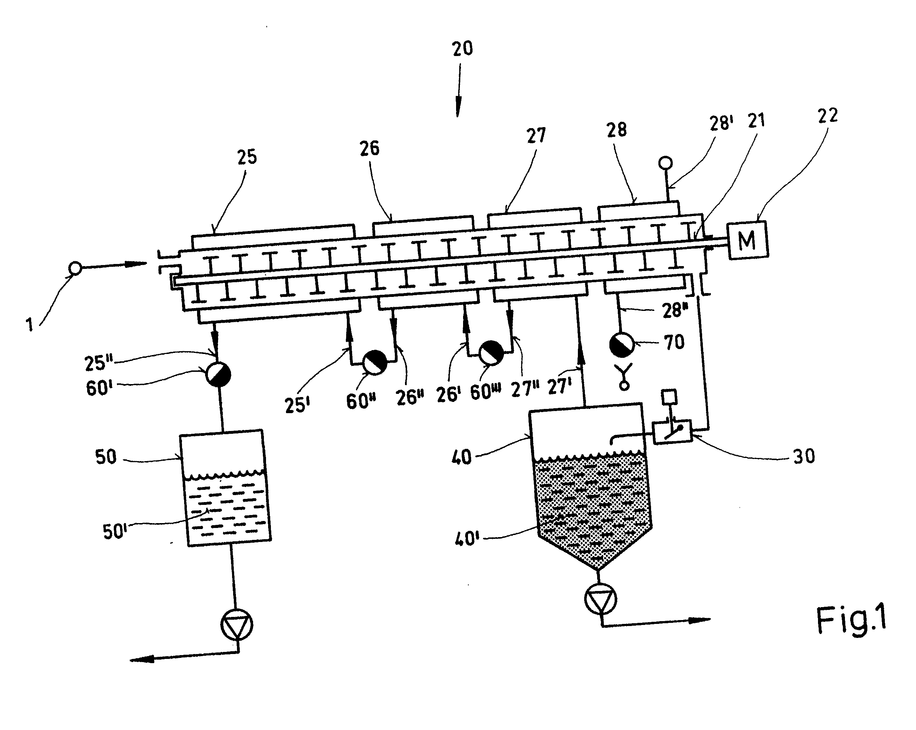

## Patentansprüche

1. Verfahren zur Gewinnung von Ammoniakwasser aus Lösungen insbesondere aus häuslichen, landwirtschaftlichen und industriellen Abwässern **dadurch gekennzeichnet**, dass zu Beginn die Lösung unter Einwirkung von Druck und Wärme erhitzt und anschliessend so entspannt wird, dass die Brüden zu Ammoniakwasser kondensieren.

2. Verfahren nach Patentanspruch 1 **dadurch gekennzeichnet**, dass für die Erhitzung der Lösung unter Druck ein Wärmetauscher, für die Ausscheidung der Gase ein Behälter mit Gasdom und ein Pressostat verwendet wird.

3. Verfahren nach Patentanspruch 1 **dadurch gekennzeichnet**, dass das gewonnene Ammoniakwasser als Dünger oder als Düngerzusatz verwendet wird.

4. Verfahren nach Patentanspruch 1 **dadurch gekennzeichnet**, dass zur Erwärmung der Lösung der Entspannungsdampf verwendet wird.

5. Verfahren nach Patentanspruch 1 **dadurch gekennzeichnet**, dass die Lösung auf ca. 65% TS eingedickt und anschliessend getrocknet wird.

6. Verfahren nach Patentanspruch 1 **dadurch gekennzeichnet**, dass der Schlammaustrag aus dem Behälter für die Entgasung durch eine geregelte Pumpe oder durch ein Regelventil geschieht.

7. Verfahren nach Patentanspruch 1, 5 und 6 **dadurch gekennzeichnet**, dass für das Eindicken mindestens ein Fallstrom oder Umlaufverdampfer verwendet wird.

8. Verfahren nach Patentanspruch 7 **dadurch gekennzeichnet**, dass für die Trocknung mindestens ein Schaufeltrockner verwendet wird.

9. Verfahren nach Patentanspruch 1 **dadurch gekennzeichnet**, dass die ausgeschiedene Trockensubstanz als Dünger verwendet wird.

Fig.1